(19) Europäisches Patentamt / European Patent Office / Office européen des brevets

(11) **EP 4 723 047 A1**

(12) **EUROPEAN PATENT APPLICATION**
published in accordance with Art. 153(4) EPC

(43) Date of publication:
08.04.2026 Bulletin 2026/15

(21) Application number: 24830706.8

(22) Date of filing: 24.06.2024

(51) International Patent Classification (IPC):
*G06T 17/00* (2006.01)     *G06T 15/20* (2011.01)
*G06T 15/08* (2011.01)

(52) Cooperative Patent Classification (CPC):
G06T 17/00; G06T 15/00; G06T 15/08; G06T 15/20;
Y02T 10/40

(86) International application number:
PCT/CN2024/101056

(87) International publication number:
WO 2025/002064 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.06.2023 CN 202310803208

(71) Applicant: ZTE CORPORATION
Shenzhen, Guangdong 518057 (CN)

(72) Inventor: WANG, Yijin
Shenzhen, Guangdong 518057 (CN)

(74) Representative: Chimini, Francesco et al
Jacobacci & Partners S.p.A.
Piazza della Vittoria 11
25122 Brescia (IT)

(54) **THREE-DIMENSIONAL SCENE MODELING METHOD, CLOUD SYSTEM, STORAGE MEDIUM, AND ELECTRONIC DEVICE**

(57) Embodiments of the present disclosure provide a three-dimensional scene modeling method, a cloud system, a storage medium, and an electronic device. The method comprises: on the basis of multiple pieces of crowd-sourcing data collected and uploaded by a user terminal, performing three-dimensional scene modeling on a scene to be modeled by means of an incremental generative neural radiance field model, to obtain a three-dimensional rendering model of a full field of view of said scene.

**Fig. 3**

Performing three-dimensional scene modeling on a to-be-modeled scene by using an incremental generative neural radiance field model based on a plurality of crowd-sourced data records collected and uploaded by one or more user terminals, so as to obtain a three-dimensional rendering model of a full field of view of the to-be-modeled scene — S302

EP 4 723 047 A1

## Description

### Cross-Reference to Related Application

The present disclosure is based on and claims priority to Chinese Patent Application CN202310803208.6 filed on June 30, 2023 and entitled "Three-Dimensional Scene Modeling Method, Cloud System, Storage Medium, and Electronic Device", the disclosure of which is incorporated herein by reference in its entirety.

### Technical Field

Embodiments of the present disclosure relate to the field of communications, and in particular, to a three-dimensional scene modeling method, a cloud system, a storage medium, and an electronic device.

### Background

Existing three-dimensional reconstruction and rendering methods suffer from the following problems:
Difficulty in data acquisition: Conventional three-dimensional reconstruction methods require specialized equipment, such as laser sensors, depth cameras, or camera arrays composed of multiple Red, Green, Blue, plus Depth (RGB-D, also abbreviated as RGBD) cameras, and data collection needs to be performed by trained personnel to obtain high-precision source data for three-dimensional reconstruction. Consequently, data acquisition is highly challenging and costly.

Poor reconstruction performance in dynamic scenes: When reconstructing outdoor buildings or street views, dynamic objects are commonly present in the scenes, for example, there may be pedestrians, animals, vehicles (such as cars, trucks, non-motorized vehicles, etc.), and static objects associated with the pedestrians (e.g., laptops, handbags, or rolling suitcases being carried by the pedestrians). Reconstructing such dynamic scenes demands substantial time and computational resources. Moreover, when dynamic objects occlude the primary subject of modeling, the quality of the three-dimensional reconstruction deteriorates further.

Missing viewpoints of the reconstruction subject: For three-dimensional modeling of a certain subject, particularly a high-rise office building or a cable-stayed bridge, it is difficult to capture images from top-down (aerial) viewpoints without specialized drone-based acquisition equipment. This results in missing viewpoint data at the source during the three-dimensional reconstruction training phase, making it challenging to achieve full 360-degree panoramic three-dimensional reconstruction and rendering.

Low rendering efficiency: Existing three-dimensional rendering tasks are mostly computed on a smart mobile device Due to the limited computational capacity, such mobile device can typically only deliver low visual resolution and simplified rendering models, significantly constraining both rendering quality and user experience.

### Summary

The embodiments of the present disclosure provide a three-dimensional scene modeling method, a cloud system, a storage medium, and an electronic device.

According to an embodiment of the present disclosure, provided is a three-dimensional scene modeling method, including: performing three-dimensional scene modeling on a to-be-modeled scene by using an incremental generative neural radiance field model based on a plurality of crowd-sourced data records collected and uploaded by one or more user terminals, so as to obtain a three-dimensional rendering model of a full field of view of the to-be-modeled scene.

According to another embodiment of the present disclosure, provided is a cloud system, including: a modeling module, configured to perform three-dimensional scene modeling on a to-be-modeled scene by using an incremental generative neural radiance field model based on a plurality of crowd-sourced data records collected and uploaded by one or more user terminals, so as to obtain a three-dimensional rendering model of a full field of view of the to-be-modeled scene.

According to another embodiment of the present disclosure, also provided is a computer-readable storage medium. The computer-readable storage medium stores a computer program, and the computer program, when executed by a processor, causes the processor to execute operations the operations in any one of the method embodiments.

According to another embodiment of the present disclosure, also provided is an electronic device, including a memory, a processor, and a computer program stored on the memory and executable on the processor, wherein the processor is configured to execute the operations in any one of the method embodiments.

### Brief Description of the Drawings

Fig. 1 is a block diagram showing the hardware structure of a computer terminal for running a three-dimensional scene modeling method according to an embodiment of the present disclosure;

Fig. 2 is a network architecture diagram of a three-dimensional scene modeling system according to an embodiment of the present disclosure;

Fig. 3 is a flowchart of a three-dimensional scene modeling method according to an embodiment of the present disclosure;

Fig. 4 is a structural block diagram of a cloud system according to an embodiment of the present disclosure;

Fig. 5 is a diagram showing a detailed network architecture of a three-dimensional scene modeling system according to an embodiment of the present disclosure;

Fig. 6 is a schematic diagram of a cloud distributed image data processing system according to an embodiment of the present disclosure;

Fig. 7 is a schematic diagram of an end-to-end deep learning model according to an embodiment of the present disclosure;

Fig. 8 is a flowchart of a three-dimensional reconstruction training phase according to an embodiment of the present disclosure; and

Fig. 9 is a flowchart of a three-dimensional rendering implementation phase according to an embodiment of the present disclosure.

## Detailed Description of the Embodiments

The embodiments of the present disclosure will be described below in detail with reference to the accompanying drawings and in conjunction with embodiments.

It should be noted that, terms such as 'first' and 'second' in the description, claims, and accompanying drawings of the present disclosure are used to distinguish similar objects, but are not necessarily used to describe a specific sequence or order.

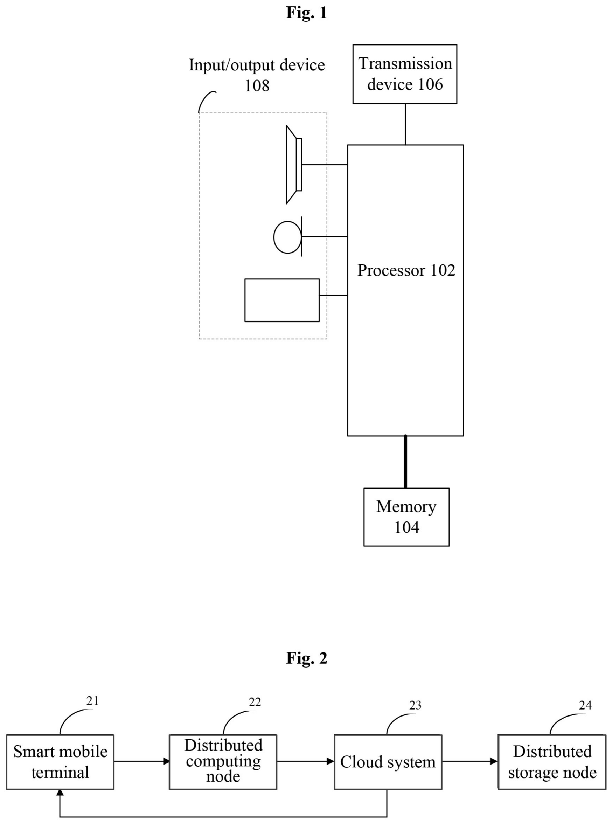

The method embodiments provided in the embodiments of the present application may be implemented in a mobile terminal, a computer terminal, or a similar computing apparatus. Taking the running on a computer terminal as an example, Fig. 1 is a block diagram showing the hardware structure of a computer terminal for running a three-dimensional scene modeling method according to an embodiment of the present disclosure. As shown in Fig. 1, the computer terminal may include one or more (only one is shown in Fig. 1) processors 102 (the one or more processors 102 may include, but are not limited to, a microprocessor or a processing apparatus such as a programmable logic device) and a memory 104 for storing data. The computer terminal may further include a transmission device 106 for a communication function and an input/output device 108. Those having ordinary skill in the art may understand that the structure shown in Fig. 1 is merely exemplary, which does not limit the structure of the foregoing computer terminal. For example, the computer terminal may further include more or fewer components than shown in Fig. 1, or have a different configuration from that shown in Fig. 1.

The memory 104 may be configured to store a computer program, for example, a software program and a module of application software, such as a computer program corresponding to the three-dimensional scene modeling method in the embodiments of the present disclosure. The one or more processors 102 run the computer program stored in the memory 104, so as to execute various function applications and data processing, that is, to implement the foregoing method. The memory 104 may include high-speed random access memory, and may also include non-volatile memory, such as one or more magnetic storage devices, flash memory, or other non-volatile solid-state memory. In some examples, the memory 104 may further include a memory remotely located with respect to the one or more processors 102, which may be connected to the computer terminal over a network. Examples of such networks include, but are not limited to, the Internet, intranets, local area networks, mobile communication networks, and combinations thereof.

The transmission device 106 is used to receive or transmit data via a network. Specific examples of the described network may include a wireless network provided by a communication provider of the computer terminal. In one example, the transmission device 106 may include a Network Interface Controller (NIC) that may be coupled to other network devices via a base station to communicate with the Internet. In an example, the transmission device 106 may be a Radio Frequency (RF) module for communicating wirelessly with the Internet.

The above three-dimensional scene modeling method according to the embodiments of the present disclosure may also operate on the network architecture shown in Fig. 2. As shown in Fig. 2, the network architecture includes: a smart mobile terminal 21, a distributed computing node 22, a cloud system 23, and a distributed storage node 24, wherein the cloud system 23 includes: a cloud distributed image data processing system 241 and a cloud three-dimensional reconstruction system 242.

Specifically, the smart mobile terminal 21 is configured to collect crowd-sourced data records for modeling a three-dimensional scene and send the crowd-sourced data records to the distributed computing nodes. Here, crowd-sourcing technology refers to a method of outsourcing work, tasks or projects to a large number of people (i.e., "crowd-sourcers") via the Internet for completion.

The distributed computing node 22 is configured to process the received crowd-sourced data records into crowd-sourced data records usable by the cloud system 23.

The cloud system 23 is configured to perform three-dimensional reconstruction and three-dimensional rendering based on the received crowd-sourced data records to obtain a three-dimensional rendering model of a to-be-modeled scene, and send the three-dimensional rendering model to the smart mobile terminal 21 for display.

The distributed storage node 24 is configured to receive the crowd-sourced data records that need to be saved and are generated by the cloud system 23 during the process of three-dimensional reconstruction and three-dimensional rendering.

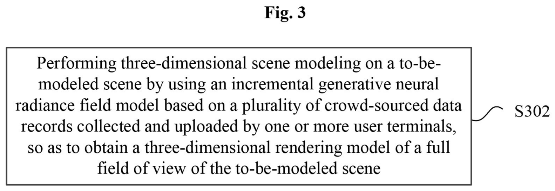

The present embodiment provides a three-dimensional scene modeling method running on the described computer terminal or network architecture. Fig. 3 is a flowchart of a three-dimensional scene modeling method according to an embodiment of the present disclosure. As shown in Fig. 3, the flow includes the following operations S302.

In operation S302, three-dimensional scene modeling is performed on a to-be-modeled scene by using an incremental generative neural radiance field model based on a plurality of crowd-sourced data records collected and uploaded by one or more user terminals, so as to obtain a three-dimensional rendering model of a full field of view of the to-be-modeled scene.

The user terminal is functionally equivalent to the smart mobile terminal in Fig. 2, the first cloud system is functionally equivalent to the aforementioned cloud distributed image data processing system 241 in Fig. 2, and the second cloud system is functionally equivalent to the aforementioned cloud three-dimensional reconstruction system 242 in Fig. 2.

In this embodiment, the crowd-sourced data record includes the following fields: an image sequence field, a location information field, and a phase identifier field. The image sequence field is used to store an image sequence, for example, 10 consecutive RGB images captured by the user terminal, and the image sequence field is represented by data_frames. The location information field is used to store location information, which refers to, for example, longitude and latitude information of the user terminal when capturing the images, the images in the same image sequence share this location information, and the location information field is represented by data_location. The phase identifier field is used to store a phase flag bit, which is used to identify a phase for which the crowd-sourced data record is used (i.e., a phase in which the crowd-sourced data record is situated), including 0 and 1, and the phase identifier field is represented by data_phase. For example, the phase flag bit of the crowd-sourced data record used in the three-dimensional reconstruction phase is 0, or the phase flag bit of the crowd-sourced data record used in the three-dimensional rendering implementation phase is 1.

In an exemplary embodiment, one crowd-sourced data record includes: a sequence of 10 consecutive RGB images, corresponding longitude and latitude location information, and a data phase flag bit.

In operation S302 of this embodiment, the operation of performing the three-dimensional scene modeling on the to-be-modeled scene by using the incremental generative neural radiance field model based on the plurality of crowd-sourced data records collected and uploaded by the one or more user terminals includes: performing, by a first cloud system, image data processing on the plurality of crowd-sourced data records to obtain an optimized first image sequence set and relative pose information of each crowd-sourced data record, wherein each crowd-sourced data record corresponds to one first image sequence in the optimized first image sequence set; updating, by the first cloud system, information stored in corresponding fields in the plurality of crowd-sourced data records based on the first image sequence, the relative pose information and first location information corresponding to each crowd-sourced data record, and inputting, by the first cloud system, the updated plurality of crowd-sourced data records to a second cloud system; and performing, by the second cloud system, the three-dimensional scene modeling by using the incremental generative neural radiance field model based on the updated plurality of crowd-sourced data records, so as to obtain the three-dimensional rendering model of the full field of view of the to-be-modeled scene.

In an embodiment, the first cloud system pre-divides a region corresponding to the to-be-modeled scene into a plurality of modeling sub-regions according to a priori digital map, and constructs a mapping table between the modeling sub-regions and distributed computing nodes. According to the first location information and based on the mapping table, the first cloud system sends the plurality of crowd-sourced data records to the corresponding distributed computing nodes, wherein one modeling sub-region corresponds to one piece of the first location information. Afterwards, the first cloud system receives a second image sequence set returned by the distributed computing nodes, and inputs the second image sequence set into an end-to-end deep learning image processing model to perform the image data processing, wherein each image sequence in the second image sequence set corresponds to one piece of the first location information.

In an embodiment, before performing image data processing on the plurality of crowd-sourced data records uploaded by user terminals, the first cloud system further adds the following five fields to each of the crowd-sourced data records: a data label field, a data score field, a key frame sequence number field, a key frame feature field, and a relative pose field; and performs the image data processing on the plurality of crowd-sourced data records with the added fields.

In an embodiment, the image data processing includes: image quality judgment, image denoising, image super-resolution, image semantic segmentation, image generation, descriptor feature extraction, intra-feature matching, fine-grained feature extraction, inter-feature matching, loop closure detection and backend pose optimization.

In an embodiment, the operation of performing, by the first cloud system, the image data processing on the plurality of crowd-sourced data records to obtain the optimized first image sequence set includes: for any second image sequence in the second image sequence set, extracting, by the first cloud system, a mask of respective dynamic objects in each image of the second image sequence through image semantic segmentation, and mapping, by the first cloud system, the mask back to a feature map corresponding to the image, wherein the dynamic objects include: a pedestrian, an animal, a vehicle, or a movable static object associated with the pedestrian; performing, by the first cloud system, background completion for an image inside the mask through image generation based on a contextual relationship of the mask in the feature map and an inter-frame feature relationship of the second image sequence, so as to obtain an optimized image sequence; and optimizing, by the first cloud system, all second image sequences in the second image sequence set by using above operations to obtain the optimized first image sequence set. Through the foregoing operation of optimizing the image sequence, all the second image sequences in the second image sequence set are optimized to obtain the first image sequence set.

In an exemplary embodiment, before extracting the mask of respective dynamic objects in each image of the image sequence, the method further includes: scoring an image quality of the second image sequence through the image quality judgment to obtain a first score of the second image sequence, and updating the first score to the data score field of the crowd-sourced data record corresponding to the second image sequence; and performing unified processing on the resolution and size of the scored images by sharing weights between the image denoising and the image super-resolution.

In an embodiment, the operation of performing, by the first cloud system, the image data processing on the plurality of crowd-sourced data records to obtain the relative pose information of each crowd-sourced data record includes: for any first image sequence, extracting descriptor information of each image in the first image sequence through descriptor feature extraction and intra-feature matching, and setting an image with a largest number of co-visible descriptors as a key frame of the first image sequence; performing fine-grained feature extraction on the key frame through fine-grained feature extraction to obtain deep features, wherein the deep features include at least one of: fine-grained representation features or fine-grained semantic features; performing feature concatenation on the first location information corresponding to the first image sequence and the deep features through inter-feature matching to obtain key frame features of the first image sequence; performing feature matching, loop closure detection and graph optimization on the deep features in the key frame features of the first image sequence through the inter-feature matching, the loop closure detection and backend pose optimization, and obtaining the relative pose information of the crowd-sourced data record corresponding to the first image sequence based on a corresponding relationship between respective first image sequences and the plurality of crowd-sourced data records; and obtaining the relative pose information of other crowd-sourced data records by using above operations for obtaining the relative pose information.

In an embodiment, the first cloud system updates the plurality of crowd-sourced data records respectively based on the first image sequence, the relative pose information and the first location information corresponding to each of the crowd-sourced data records, and inputs the updated plurality of crowd-sourced data records into the second cloud system.

In an embodiment, before inputting, by the first cloud system, the updated plurality of crowd-sourced data records to the second cloud system, the method further includes: for any crowd-sourced data record, determining a phase in which the crowd-sourced data record is situated according to a phase identifier field of the crowd-sourced data record; for a first crowd-sourced data record in a three-dimensional reconstruction training phase, storing the first crowd-sourced data record whose first score is greater than or equal to a first preset threshold into a distributed database, wherein the first score is obtained by the cloud system scoring an image quality of the first image sequence corresponding to the first crowd-sourced data record through an image quality judgment component; and for a second crowd-sourced data record in a three-dimensional rendering implementation phase, performing similarity matching between key frame features of the second crowd-sourced data record and corresponding key frame features stored in the distributed database, and storing the second crowd-sourced data record whose similarity is less than a second preset threshold into the distributed database.

In an embodiment, the second cloud system performs three-dimensional scene modeling by using the incremental generative neural radiance field model based on the updated plurality of crowd-sourced data records, so as to obtain the three-dimensional rendering model of the full field of view of the to-be-modeled scene.

In an embodiment, before performing the three-dimensional scene modeling by using the incremental generative neural radiance field model, the method further includes: obtaining, by the second cloud system, a plurality of first crowd-sourced data records from the distributed database, and sorting the plurality of the first crowd-sourced data records in a descending order based on the first score of each of the plurality of first crowd-sourced data records; inputting first N first crowd-sourced data records, the relative pose information of the first N first crowd-sourced data records, and the first location information corresponding to the first N first crowd-sourced data records into a pre-designed incremental generative neural radiance field model, so as to obtain a trained incremental generative neural radiance field model, wherein N is an integer greater than zero; adjusting weights and biases of a neural network in the trained incremental generative neural radiance field model to achieve convergence of the incremental generative neural radiance field model; and in a case where the incremental generative neural radiance field model achieves convergence, sorting the first N first crowd-sourced data records in a descending order based on a weighted score of each of the first N first crowd-sourced data records, and selecting first M first crowd-sourced data records to perform fine-tuning training on the incremental generative neural radiance field model, wherein M is an integer greater than zero and less than N.

In an exemplary embodiment, before sorting the plurality of first crowd-sourced data records in the descending order based on the final scores of the first N first crowd-sourced data records, the method further includes: scoring the first N first crowd-sourced data records to obtain second scores of the first N first crowd-sourced data records; performing a weighted calculation on the first scores and the second scores of the first N first crowd-sourced data records to obtain weighted scores of the N first crowd-sourced data records.

Through the above operations, the cloud system performs three-dimensional reconstruction and rendering of the scene, which avoids the limitation of the effect of three-dimensional reconstruction and rendering due to insufficient computing power of the mobile terminal. The crowd-sourced data records used by the cloud system can be collected and uploaded by user terminals, reducing the difficulty of data acquisition. Meanwhile, the incremental generative neural radiance field model can generate the three-dimensional radiance field distribution of the missing field of view, so as to obtain a three-dimensional rendering model with a full field of view. Therefore, the scheme can solve the problems of difficult data acquisition, missing viewing angles of the reconstructed subject and low rendering efficiency existing in the existing three-dimensional reconstruction and rendering methods in the related art, and achieve the effect of improving the efficiency of three-dimensional scene modeling.

From the description of the above embodiments, those having ordinary skill in the art can clearly understand that the method according to the above embodiments can be implemented by means of software plus a necessary universal hardware platform, and of course, can also be implemented by hardware, but in many cases, the former is a better implementation. Based on such understanding, the essence of the technical solution of the present disclosure or the part contributing to the related art can be embodied in the form of a software product, which is stored in a storage medium (such as Read-Only Memory (ROM)/Random Access Memory (RAM), magnetic disk, optical disc) and includes several instructions to enable a terminal device (which may be a mobile phone, a computer, a server, a network device, etc.) to execute the methods described in the various embodiments of the present disclosure.

A three-dimensional scene modeling system is also provided in the embodiments of the present disclosure, which is configured to implement the above embodiments and exemplary implementations, and the descriptions of the already explained parts are omitted here. As used below, the term "module" may be a combination of software and/or hardware that implements a predetermined function. Although the device described in the following embodiments is preferably implemented by software, implementation by hardware or a combination of software and hardware is also possible and conceived.

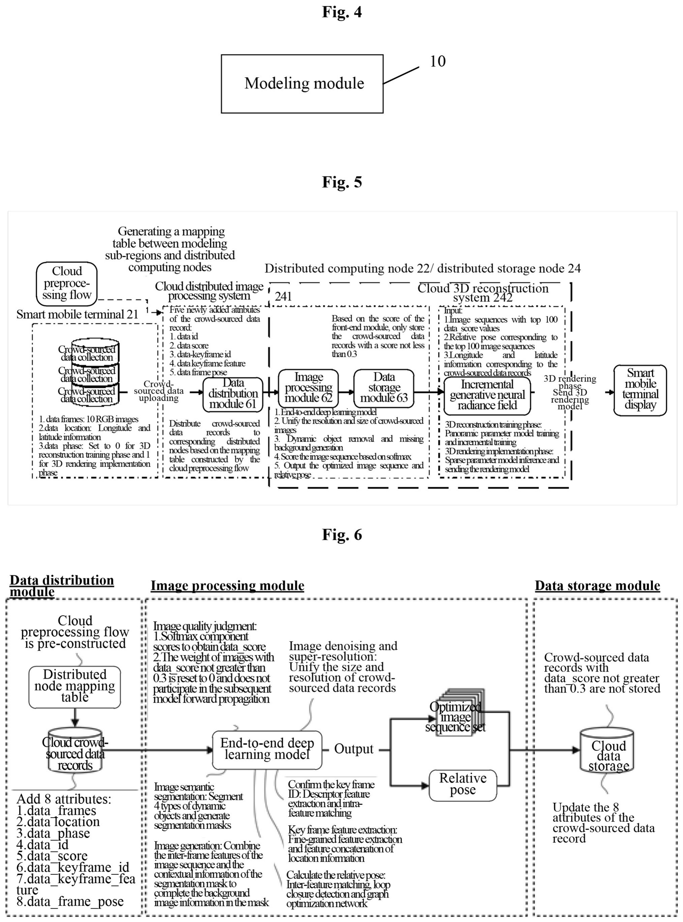

Fig. 4 is a structural block diagram of a cloud system according to an embodiment of the present disclosure. As shown in Fig. 4, the cloud system includes:

a modeling module 10 which is configured to perform three-dimensional scene modeling on a to-be-modeled scene by using an incremental generative neural radiance field model based on a plurality of crowd-sourced data records collected and uploaded by one or more user terminals, so as to obtain a three-dimensional rendering model of a full field of view of the to-be-modeled scene.

It should be noted that each module may be implemented by software or hardware. The latter may be implemented in the following manner, but is not limited thereto. All the modules are located in a same processor; alternatively, the modules are located in different processors in an arbitrary combination.

To facilitate understanding of the technical solutions provided by the present disclosure, the technical solutions are described in detail as follows with reference to embodiments of specific scenarios.

Fig. 5 is a diagram showing a detailed network architecture of a three-dimensional scene modeling system according to an embodiment of the present disclosure. As shown in Fig. 5, in addition to the smart mobile terminal 21, the distributed computing node 22, the cloud system 23, the distributed storage node 24, the cloud distributed image data processing system 241 and the cloud three-dimensional reconstruction system 242, the cloud distributed image data processing system 241 further includes a data distribution module 61, an image processing module 62 and a data storage module 63, and the cloud three-dimensional reconstruction system 242 includes an incremental generative neural radiance field.

Both the cloud distributed image data processing system 241 and the cloud three-dimensional reconstruction system 242 of the cloud system 23 each include an end-to-end deep learning model, so the cloud system 23 is supported by powerful computing resources.

The cloud distributed image processing system is a cloud distributed image processing system for crowd-sourced data records, which is deployed on the cloud and combines an end-to-end deep learning model, distributed computing technology and distributed storage technology, being a distributed image processing system.

In this embodiment, the smart mobile terminal is configured to perform data collection and crowd-sourced data record uploading, including:

using an RGB camera equipped on the smart mobile terminal as the data collection medium to perform data collection in a crowd-sourcing manner, and uploading three types of information based on the collected data: an image sequence, longitude and latitude location information at the time of shooting (obtained through the smart mobile terminal), and a data phase flag bit, which together form one crowd-sourced data record.

The image sequence refers to a number of consecutive RGB images captured, represented by a field data_frames; for example, an image sequence formed by a set of images includes 10 consecutive RGB images captured.

The longitude and latitude information at the time of shooting is shared among the set of images in the image sequence, for example, the 10 RGB images share the same location information, represented by the field data_location.

The data phase flag bit is used to indicate the specific phase for which the data is used, represented by the field data_phase, where data_phase = 0 indicates a three-dimensional reconstruction training phase, and data_phase = 1 indicates a three-dimensional rendering implementation phase.

In an embodiment, the specific phase for which the uploaded crowd-sourced data record is used is distinguished according to the phase flag bit of the uploaded crowd-sourced data record. For example, data_phase = 0 indicates the three-dimensional reconstruction training phase, and data_phase = 1 indicates the three-dimensional rendering implementation phase. In the three-dimensional reconstruction training phase, the crowd-sourced data records serve as source data for three-dimensional reconstruction, which are uploaded to the cloud by the smart mobile terminal, and the life cycle of the data collection task of the smart mobile terminal ends after successful upload. In the three-dimensional rendering implementation phase, the crowd-sourced data records serve as query data for three-dimensional rendering, which are uploaded to the cloud by the smart mobile terminal and wait for system matching and query. If there is a corresponding three-dimensional reconstruction model, the three-dimensional reconstruction model will be sent down to the smart mobile terminal by the cloud and displayed on the smart mobile terminal.

After collecting the data, the smart mobile terminal uploads a sequence of 10 consecutive RGB images, the corresponding longitude and latitude information at the time of shooting, and the data phase flag bit as one crowd-sourced data record to the cloud system, namely the cloud distributed image data processing system and the cloud three-dimensional reconstruction system.

Fig. 6 is a schematic diagram of a cloud distributed image data processing system according to an embodiment of the present disclosure. As shown in Fig. 6, before the cloud system 23 operates, the cloud distributed image data processing system is configured with a preprocessing flow. Specifically, the cloud distributed image data processing system takes a digital map of a priori data as a template in advance, selects a suitable modeling region division method according to actual application conditions, divides the entire modeling region into a plurality of modeling sub-regions, and constructs a mapping table between the modeling sub-regions and distributed computing nodes. One modeling sub-region is in one-to-one correspondence with one independent distributed computing node, and this mapping table needs to be used in both the three-dimensional reconstruction training phase and the three-dimensional rendering implementation phase.

In an embodiment, there are two division methods for the modeling region:

1) Dividing the entire modeling region into a plurality of modeling sub-regions with uniform areas by taking streets as dividing lines based on the priori digital map;

2) Dividing the modeling region into a plurality of modeling sub-regions with non-uniform areas by taking landmark buildings as centers of the modeling sub-regions based on the priori digital map.

The cloud distributed image data processing system is further configured to, after receiving the uploaded crowd-sourced data records, add new fields to the uploaded crowd-sourced data records, find the modeling sub-region to which the longitude and latitude information of the crowd-sourced data records belongs, and then send the crowd-sourced data records to the corresponding distributed computing node based on the previously constructed mapping table.

The five fields supplemented (added) by the cloud distributed image data processing system for each of the crowd-sourced data records include: data_id, data_score, data_keyframe_id, data_keyframe_feature, and data_frame_pose.

1) The data_id field is used to encapsulate the unique code of the crowd-sourced data record, and the data_ids of different crowd-sourced data records are different; the cloud distributed image data processing system generates a unique code by combining the upload time, geographic location information and device model information of the crowd-sourced data record, and updates the unique code to the data_id field.

2) The data_score field is used to encapsulate the image sequence score of the crowd-sourced data record, and the score range of the image sequence of the crowd-sourced data record is, for example, [0, 100].
The image sequence score of the crowd-sourced data record is a floating-point number, which is used for the evaluation and screening of the image sequence. The initial data_score is scored by the cloud distributed image data processing system, and subsequently, the data _score may be re-weighted and calculated by the incremental generative radiance field model system to obtain the final score. The calculation of data_score in the incremental generative radiance field model system is obtained by the following formula (1):

$$data\_score = a*quality\_score + b*nerf\_score \qquad \text{Formula (1)}$$

where quality_score is calculated by the image processing module 62 of the cloud distributed image data processing system and has an initial value of 0; nerf_score is calculated by the incremental generative neural radiance field model of the incremental generative radiance field model system and has an initial value of 0; a and b are weight hyperparameters, in the cloud distributed image data processing system, a=0.9 and b=0; and in the incremental generative neural radiance field model of the incremental generative radiance field model system, a=0.4 and b=0.6.

3) The data_keyframe_id field is used to encapsulate a key frame sequence number of the crowd-sourced data record, and the key frame sequence number of the crowd-sourced data record is represented by an integer in [0, 9], indicating the most representative image sequence number among the 10 RGB images of the image sequence, and the corresponding image can be found in data_frames through data_keyframe_id.

4) The data_keyframe_feature field is used to encapsulate the deep learning features of the key frame, representing the deep learning features of the key frame image with a unified dimension of 130, which is calculated by the cloud distributed image data processing system.

5) The data_frame_pose field is used to encapsulate the image relative pose information of the crowd-sourced data record, and the image relative pose information of the crowd-sourced data record is represented by a displacement parameter T and a rotation parameter Q, where $T = (x_t, y_t, z_t)$ represents a three-dimensional translation vector, and $Q = (w_q, x_q, y_q, z_q)$ represents a rotation vector in the form of a quaternion. T and Q can represent the relationship of relative displacement and rotation direction between respective images in an image sequence, and each image in the image sequence has a set of values of T and Q.

The relative pose corresponding to the image sequence refers to the relative location and direction relationship between two images, which is usually composed of a rotation vector and a translation vector. The rotation vector and the translation vector describe the transformation from one camera coordinate system to another. In the fields of computer vision and robotics, it is often necessary to determine the relative pose between a group of images to align or register the group of images or establish the spatial relationship between the group of images. In the three-dimensional reconstruction training phase, it is necessary to determine the relative pose between two cameras to calculate the corresponding points in the field of view of the two cameras among the points in the scene.

Estimating the relative pose corresponding to images is an important problem in the fields of computer vision and robotics, and there are many methods to achieve such estimation, including feature matching, structured light, deep learning, etc. The embodiments of the present disclosure use relative pose based on feature matching of deep learning.

After field supplementation, the fields included in the crowd-sourced data format are shown in Table 1, that is, a complete crowd-sourced data record has 8 attributes, represented by 8 fields.

Table 1 Format of Crowd-sourced Data

| Field name | Field meaning | Initialization phase |
| --- | --- | --- |
| data frames | 10 RGB images | Smart mobile terminal |
| data_location | Longitude and latitude information | Smart mobile terminal |
| data_phase | Data phase flag bit | Smart mobile terminal |

(continued)

| Field name | Field meaning | Initialization phase |
|---|---|---|
| data id | Unique code of a crowd-sourced data record | Cloud |
| data_score | Evaluation score for a crowd sourced data record | Cloud |
| data_keyframe_id | Key frame number | Cloud |
| data_key frame_feature | Keyframe Depth Learning Features | Cloud |
| data_frame_pose | Relative pose of 10 RGB images | Cloud |

The distribution module 61 is configured to supplement 5 fields to the uploaded crowd-sourced data records, then divide the uploaded crowd-sourced data records into corresponding modeling regions based on the longitude and latitude location information in the crowd-sourced data records, and then send the crowd-sourced data records to the corresponding distributed computing nodes 22 according to the mapping table between the modeling regions and the distributed computing nodes.

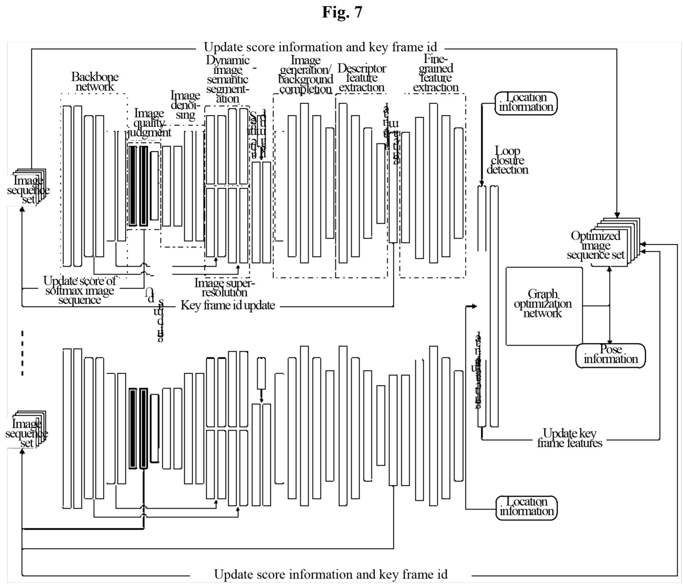

The distributed computing node 22 is configured to receive several crowd-sourced data records in the same region but with different specific locations, extract the image sequence corresponding to the data_frames field of the crowd-sourced data records and the longitude and latitude location information represented by data_location, and input an image sequence set composed of several image sequences of several crowd-sourced data records and the corresponding location information into the end-to-end deep learning image processing model of the image processing module 62; The image processing module 62 is mainly composed of an end-to-end deep learning image processing model, and all processing flows of the image processing module 62 are executed on the GPU. The end-to-end deep learning image processing model has 1 CPU-GPU I/O during data input and 1 GPU-CPU I/O during data output, with a total of 2 I/O operations in the whole process, and other image data processing is performed on the GPU throughout the process, so the image processing efficiency is extremely high. A schematic diagram of the architecture of the end-to-end deep learning model is shown in Fig. 7.

The end-to-end deep learning image processing model in the image processing module 62 takes an image sequence and longitude and latitude location information as input, takes an optimized image sequence, an image sequence score, a key frame sequence number, deep learning features of a key frame and a relative pose of the image sequence as output. Based on the powerful feature extraction capability of the deep convolutional neural network and the nonlinear mapping capability brought by the activation function, combined with the down-sampling, up-sampling and feature fusion means of the convolutional neural network, the following image data processing capability, which can only be realized by the series connection of traditional multiple models, can be achieved: image quality judgment, image denoising, image super-resolution, image semantic segmentation, image generation, descriptor feature extraction, intra-feature matching, fine-grained feature extraction, inter-feature matching, loop closure detection and backend pose optimization.

In an embodiment, in the image quality judgment process, the image quality judgment component in the cloud distributed image data processing system 241 includes a softmax component, and the softmax component uses the feature extraction and feature abstraction capabilities of the convolutional neural network to judge the quality of the input image, score the image sequence, record the score as quality_score; and update quality_score to the data_score field of the attributes of the crowd-sourced data record.

For example, the input image sequence is scored to obtain quality_score, the higher the value of quality_score, the higher the quality of the original image and the greater the contribution to the end-to-end deep learning model. On the contrary, if the value of quality_score is lower than a threshold (e.g., 0.3), during model training, in the process of forward inference of the end-to-end deep learning model, the weight of the convolutional neural network feature corresponding to the value of quality_score is set to 0, that is, the image sequence does not participate in subsequent feature extraction and function realization, thereby improving the forward inference efficiency of the end-to-end deep learning model, i.e., the model training efficiency.

As a normalized output component, softmax is an index commonly used in multi-classification problems, which is used to represent the probability distribution that a sample belongs to each category. In deep learning, softmax is usually used as the activation function of the output layer, which can map the output of the network to a probability distribution. In the embodiments of the present disclosure, the output value of softmax is a floating-point number with a value range of [0, 100], and a higher softmax score indicates a higher image quality and a greater contribution to the subsequent cloud three-dimensional reconstruction system.

In the present embodiment, different from the conventional deep learning image processing system, the image processing module 62 is a deep learning model with an end-to-end architecture, which can significantly reduce the CPU-GPU exchange operations of data compared with the deep learning model with a conventional pipeline architecture, and greatly reduce the data I/O throughput of cloud computing nodes, and will greatly improve the efficiency of image data processing especially when processing massive crowd-sourced data records. Through the cloud distributed computing nodes, an optimized image sequence, an image sequence score, a key frame sequence number, deep learning features of a key frame and relative pose information of images in the image sequence can be obtained.

By adopting an end-to-end deep learning algorithm for image data processing, the accuracy of reconstruction and rendering is effectively supported. In the present embodiment, an end-to-end deep learning algorithm is adopted, and except for two I/O operations at input/output, the calculation is performed on the GPU throughout the process, realizing the functions of image quality judgment, image denoising, image super-resolution, image semantic segmentation, image generation, descriptor feature extraction, intra-feature matching, fine-grained feature extraction, inter-feature matching, loop closure detection and backend pose optimization. Compared with traditional computer vision algorithms, the end-to-end deep learning algorithm has higher accuracy and robustness, can handle more complex scenes and data, and improves the accuracy of reconstruction and rendering. Compared with the pipeline processing of deep learning models, the end-to-end deep learning algorithm greatly reduces I/O operations and improves the real-time performance of reconstruction and rendering.

The data storage module 63 is configured to, after the softmax layer calculates the image quality score (quality_score) and updates the data_score field of the crowd-sourced data record, store the image sequence (crowd-sourced data record) whose score in the data_score field is greater than or equal to 0.3 into the distributed storage node 24, and not store the image sequence (crowd-sourced data record) whose score is less than 0.3, and update the corresponding quality_score value to the data_score field.

In an embodiment, image denoising and image super-resolution share weights for the unified processing of crowd-sourced data records. Due to the different devices used for crowd-sourcing uploads, the resolution and image size of the uploaded images are inconsistent, so the data needs to be uniformly processed, and the image sequences are unified to the same resolution and size through image denoising and image super-resolution.

In an embodiment, image semantic segmentation and image generation are two independent subbranches that share front-end feature extraction and have a strict sequential relationship, that is, first, the image semantic segmentation component is used to extract the mask of dynamic objects in the image, then the mask is mapped back to the feature map corresponding to the image, and the image generation component regenerates the image inside the mask based on the contextual relationship of the mask in the feature map and the inter-frame feature relationship of the image sequence, so as to complete the image into background information irrelevant to dynamic objects.

The mask is the outline of the dynamic objects, the image inside the outline is the main body of the dynamic objects, and the image outside the outline is the background irrelevant to the dynamic objects.

In the present embodiment, dynamic objects can be divided into four categories: (1) Pedestrians, i.e., pedestrians sitting, standing or moving in the image; (2) Animals, i.e., cats, dogs, birds, etc., in the image; (3) Vehicles, i.e., cars, trucks, buses, non-motor vehicles, etc.; (4) Movable static objects associated with pedestrians, such as laptops, handbags, suitcases, and long-handled umbrellas held by people. The image semantic segmentation component performs pixel-level classification on these four types of dynamic objects to obtain corresponding masks.

The judgment conditions for dynamic objects of type (4) include the following two conditions, wherein an object is determined as a dynamic object of type (4) when either one of the two conditions is satisfied:

a. The pedestrian and the movable static object share the same mask edge, meaning that the pedestrian and the movable static object happen to be in contact at this time, i.e., the pedestrian mask and the movable static object mask have a part of the same mask edge shared;

b. The intersection over union (IoU) of the segmentation area of the pedestrian and the segmentation area of the movable static object is greater than 0.1, as shown in Formula (2) and Formula (3), meaning that there is an interactive relationship between the pedestrian and the movable static object at this time, i.e., the ratio of the intersecting area of the pedestrian mask and the movable static object mask to the merged area is greater than 0.1.

$$IoU_{mask} = occur\_mask/union\_mask \qquad \text{Formula (2)}$$

$$IoU_{mask} > 0.1 \qquad \text{Formula (3)}$$

where occur_mask represents the intersecting area of the pedestrian mask and the movable static object mask, and union_mask represents the merged area of the pedestrian mask and the movable static object mask.

The end-to-end deep learning image processing model, based on the image semantic segmentation and image generation components, filters out dynamic objects in the output image and completes a clean background. The image semantic segmentation and image generation components jointly realize the functions of dynamic object filtering and background completion for the image. The mask is the outline of the dynamic object; the inside of the outline is the main body of the dynamic object, and the outside of the outline is the background irrelevant to the dynamic object. Thus, an optimized image of the image sequence set is obtained, and the optimized image is rewritten to the data_frames field to overwrite the originally uploaded image sequence.

In an embodiment, descriptor feature extraction and intra-feature matching are used to extract descriptor information of the image, match to obtain the corresponding image with the largest number of co-visible descriptors, set this image as the key frame of the image sequence, and update the key frame ID of the corresponding image sequence, i.e., update the data_keyframe_id field.

In an embodiment, fine-grained feature extraction refers to performing further fine-grained feature extraction on the key frame features, which consists of 64-dimensional fine-grained representation features and 64-dimensional fine-grained semantic features, totaling 128-dimensional deep features.

In an embodiment, during inter-feature matching, key frame feature concatenation needs to be performed, and the feature composition includes: 128-dimensional fine-grained features and 2-dimensional location information (longitude and latitude information), finally obtaining 130-dimensional key frame features, and updating the corresponding key frame deep learning feature attribute, i.e., update the data_keyframe_feature field.

In an embodiment, inter-feature matching, loop closure detection and backend pose optimization perform feature matching, loop closure detection and graph optimization on the fine-grained features of key frames selected from different image sequences to obtain the pose information of the image sequence, which is recorded in the data_frame_pose field.

Different from conventional deep learning image processing systems, the image processing module 62 of the present embodiment is a deep learning model with an end-to-end architecture. Compared with conventional deep learning models with a pipeline architecture, the deep learning model with the end-to-end architecture can significantly reduce CPU-GPU data exchange operations, greatly reduce the data I/O throughput of cloud computing nodes, and will greatly improve the efficiency of image data processing especially when processing massive crowd-sourced data records. Through cloud distributed computing nodes, an optimized image sequence, an image sequence score, a key frame sequence number, deep learning features of a key frame and relative pose information of images in the image sequence can be obtained.

The data storage module 63 is further configured to, when storing the crowd-sourced data record, first determine the phase in which the crowd-sourced data record is situated through the data_phase field in the crowd-sourced data record.

In the case where the crowd-sourced data record is in the three-dimensional reconstruction training phase, the quality_score of the image sequence after passing through the image processing module is obtained through reading the data_score field in the crowd-sourced data record, wherein the crowd-sourced data record with a quality_score lower than 0.3 is not stored, and the crowd-sourced data record with a quality_score not less than 0.3 is stored in the distributed database.

In the case where the crowd-sourced data record is in the three-dimensional rendering implementation phase, similarity matching is performed between the 130-dimensional key frame features recorded in the data_keyframe_feature field of the crowd-sourced data record uploaded this time and the features of the data_keyframe_feature field of the data stored in the distributed database (i.e., the distributed computing and storage node 23), where L2 similarity, i.e., Euclidean distance, is used for measurement. If the similarity is greater than 0.6, the crowd-sourced data record is not stored; otherwise, the crowd-sourced data record is stored.

In the present embodiment, the data storage module 63 is further configured to update the quality_score value to the data_score field accordingly.

In addition, for stored data, the image sequence optimized by the image processing module 62 is rewritten to the data_frames field to cover the original unoptimized image sequence images, while the data_id and data_location fields remain unchanged; the key frame sequence number is recorded in the data_keyframe_id field; the deep learning features of the key frame are recorded in the data_keyframe_feature field; the relative pose information of the image sequence is recorded in the data_frame_pose field.

In the cloud three-dimensional reconstruction system, the optimized image sequence and pose information obtained by the cloud distributed image data processing system 241, together with the longitude and latitude location information collected and uploaded by the smart mobile terminal, are used to train the incremental generative neural radiance field model. The incremental generative neural radiance field model is also an end-to-end deep learning model, which can predict the radiance field distribution at the camera's location according to the calculated pose information and modeling data, and can generate the three-dimensional radiance field distribution of the missing field of view. The model shares the same feature extraction network with three branches: depth estimation, neural radiance field prediction, and pose regression. Then, the deep learning features of the three branches are concatenated, and then input into the multi-field-of-view radiance field generation module, and combined with location information to generate a full-field-of-view neural radiance field.

In the cloud three-dimensional reconstruction system, the architecture of the end-to-end deep learning model includes the following five major components:

1) Backbone network, used for basic feature extraction;

2) Neural radiance field component, fitting the basic neural radiance field based on the deep learning features extracted by the backbone network;

3) Depth estimation component, estimating the distance from the camera medium to the reconstructed subject from the image based on the deep learning features extracted by the backbone network;

4) Pose regression component, regressing the pose of feature points in the image according to the image sequence pose data output by the cloud distributed image data processing system based on the deep learning features extracted by the backbone network; and

5) Multi-field-of-view neural radiance field generation, generating the three-dimensional neural radiance field of the missing field of view based on the generative neural network and combining the outputs of the neural radiance field component, depth estimation component and pose regression component.

The cloud three-dimensional reconstruction system of the embodiments of the present disclosure is an incremental generative neural radiance field, which is different from traditional neural radiance field methods. The incremental generative neural radiance field of the embodiments of the present disclosure not only has the three-dimensional reconstruction function of the neural radiance field model, but also can generate the field of view that the training data fails to capture, enabling the three-dimensional reconstruction model to display a 360-degree full field of view.

Then, weighted calculation is performed in combination with the quality_score in the cloud distributed image data processing system to update the weighted score data_score of the crowd-sourced data record.

The incremental training realized by the incremental generative neural radiance field model is to sort the values of the data_score field in descending order in the distributed database, select the top 100 crowd-sourced data records with the highest scores to train the incremental generative neural radiance field. After training, the softmax component is used to score the weights of the 100 training data in the model to obtain nerf_score, and then weighted calculation is performed in combination with the quality_score in the cloud distributed image data processing system to update the weighted score data_score of the crowd-sourced data record.

The embodiments of the present disclosure also provide a three-dimensional scene modeling method, which performs location division, image data processing, feature extraction and matching on the data uploaded through crowd-sourcing based on distributed computing and deep learning methods, thereby realizing three-dimensional reconstruction of the modeled object. The method combines crowd-sourcing technology, cloud computing technology, computer vision, deep learning and other technologies, and has the advantages of high efficiency, real-time performance and low cost, and can be widely applied to industries, urban style display, traffic planning, cultural heritage protection, entertainment and other fields.

In the embodiments of the present disclosure, the cloud distributed image data processing system 241 is a pre-process of the cloud three-dimensional reconstruction system 242, and the cloud distributed image data processing system 241 provides training data support for the cloud three-dimensional reconstruction system 242.

In the present embodiment, the full parameterization in the three-dimensional reconstruction training phase and the sparse parameterization in the three-dimensional rendering implementation phase are realized by reparameterization technology. The incremental generative radiance field model system has efficient and high-quality image data processing capabilities, and can completely and accurately complete the reconstruction and real-time rendering tasks of large-scale three-dimensional scenes.

In an embodiment, the three-dimensional scene modeling method is implemented in two phases: a three-dimensional reconstruction training phase and a three-dimensional rendering implementation phase, with the three-dimensional reconstruction training phase preceding the three-dimensional rendering implementation phase. It is necessary to complete the three-dimensional modeling of the modeled subject in the three-dimensional reconstruction training phase to view the rendered object in the three-dimensional rendering implementation phase. In the three-dimensional reconstruction training phase, the smart mobile terminal is responsible for data collection and crowd-sourcing upload, and the cloud is responsible for data region division, distributed computing node distribution, image sequence optimization and incremental generative neural radiance field model training. In the three-dimensional rendering implementation phase, the smart mobile terminal is responsible for data collection, upload, and receiving the rendering model from the distributed cloud and displaying it, and the cloud is responsible for querying, feature matching, pose calculation, three-dimensional rendering and rendering model delivery for the data uploaded by the smart mobile terminal.

The smart mobile terminal data collection, the cloud distributed image data processing system, and the cloud three-dimensional reconstruction system in the present disclosure follow a sequential relationship in the entire process. First, the smart mobile terminal data collection process is initiated, and the collected crowd-sourced data records are uploaded to the cloud; then the cloud distributed image data processing system processes the original data uploaded through crowd-sourcing to obtain an optimized image sequence and pose information; finally, through the cloud three-dimensional reconstruction system, the incremental generative neural radiance field model is trained in the three-dimensional reconstruction training phase, and the corresponding rendering model is generated and delivered to the smart mobile terminal in the three-dimensional rendering implementation phase.

1) Three-Dimensional Reconstruction Training Phase

In the three-dimensional reconstruction training phase, the smart mobile terminal is responsible for data collection and crowd-sourced data record upload, and the cloud is responsible for data region division, distribution to a distributed computing node, image sequence optimization and incremental generative neural radiance field model training.

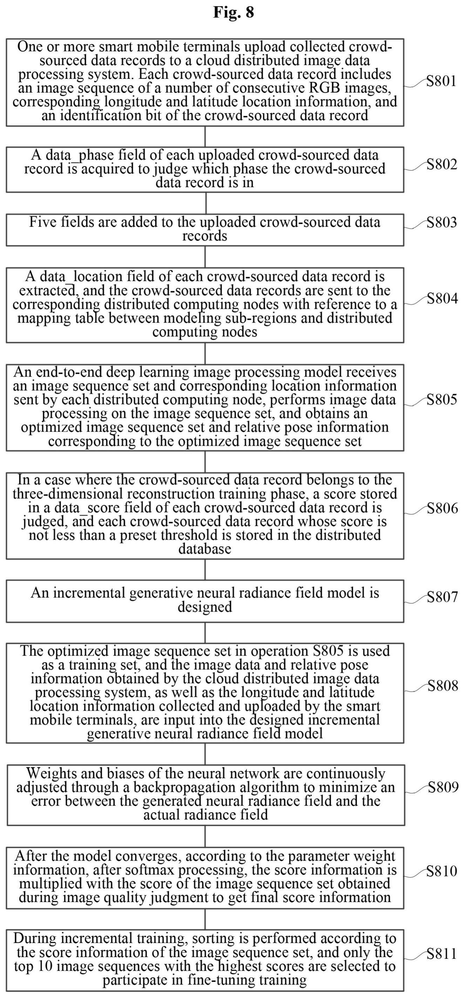

Fig. 8 is a flowchart of a three-dimensional reconstruction training phase according to an embodiment of the present disclosure. As shown in Fig. 8, the process includes the following operations S801 to S811.

In operation S801, one or more smart mobile terminals upload collected crowd-sourced data records to a cloud distributed image data processing system. Each crowd-sourced data record includes an image sequence of a number of consecutive RGB images, corresponding longitude and latitude location information, and an identification bit of the crowd-sourced data record.

In an exemplary embodiment, one or more smart mobile terminals collect and upload crowd-sourced data records, and each smart mobile terminal uploads one or more crowd-sourced data records.

In operation S802, a data_phase field of each uploaded crowd-sourced data record is acquired to judge which phase the crowd-sourced data record is in; for example, data_phase = 0 indicates the three-dimensional reconstruction training phase, and data_phase = 1 indicates the three-dimensional rendering implementation phase.

In operation S803, the following five fields are added to the uploaded crowd-sourced data records: data_id, data_score, data_keyframe_id, data_keyframe_feature, and data_frame_pose.

In operation S804, a data_location field of each crowd-sourced data record is extracted, and the crowd-sourced data records are sent to the corresponding distributed computing nodes with reference to a mapping table between modeling sub-regions and distributed computing nodes.

In operation S805, an end-to-end deep learning image processing model receives an image sequence set and corresponding location information sent by each distributed computing node, performs image data processing on the image sequence set, and obtains an optimized image sequence set and relative pose information corresponding to the optimized image sequence set.

The image data processing flow includes: image quality judgment, image denoising, image super-resolution, image semantic segmentation, image generation, descriptor feature extraction, intra-feature matching, fine-grained feature extraction, inter-feature matching, loop closure detection and backend pose optimization.

In operation S806, in a case where the crowd-sourced data record belongs to the three-dimensional reconstruction training phase, a score stored in a data_score field of each crowd-sourced data record is judged, and each crowd-sourced data record whose score is not less than a preset threshold is stored in the distributed database.

The score in operation S806 is equivalent to the first score in the above embodiments.

In the three-dimensional reconstruction training phase, incremental iterative training is performed according to the data_score of the training data. Thus, as more high-quality crowd-sourced data records are available, the model becomes more accurate and perfect, and the end-to-end model adopts a full-weight parameter mode for model fitting.

In an exemplary embodiment, the preset threshold is set to 0.3.

In operation S807, an incremental generative neural radiance field model is designed.

The incremental generative neural radiance field model is a model capable of predicting the radiance field distribution at the camera's location with a full field of view.

In operation S808, the optimized image sequence set in operation S805 is used as a training set, and the image data and relative pose information obtained by the cloud distributed image data processing system, as well as the longitude and latitude location information collected and uploaded by the smart mobile terminals, are input into the designed incremental generative neural radiance field model. After concatenating the deep learning features of the three branches (neural radiance field distribution, depth estimation, and pose regression) in the designed incremental generative neural radiance field model, the neural radiance field model is output through the multi-field-of-view radiance field generation network.

In operation S809, weights and biases of the neural network are continuously adjusted through a backpropagation algorithm to minimize an error between the generated neural radiance field and the actual radiance field.

In operation S810, after the model converges, according to the parameter weight information, after softmax processing, the score information is multiplied with the score of the image sequence set obtained during image quality judgment to get final score information.

In operation S811, during incremental training, sorting is performed according to the score information of the image sequence set, and only the top 10 image sequences with the highest scores are selected to participate in fine-tuning training.

Here, operation S804 corresponds to the data distribution module 61 in the above embodiments, operation S805 corresponds to the image processing module 62 in the above embodiments, and operation S806 corresponds to the data storage module 63 in the above embodiments.

In the three-dimensional reconstruction training phase, the end-to-end deep learning model system applies the full feature weights of the deep neural network for model forward inference and gradient backpropagation, ensuring that the trained three-dimensional model has an accurate architecture, clear textures, and natural lighting.

2) Three-Dimensional Rendering Implementation Phase

In the three-dimensional rendering implementation phase, the smart mobile terminal is responsible for data collection, crowd-sourced data record upload, and receiving the rendering model from the distributed cloud and displaying the rendering model; the cloud is responsible for querying, feature matching, pose calculation, three-dimensional rendering, and rendering model delivery for the crowd-sourced data records uploaded by the smart mobile terminal.

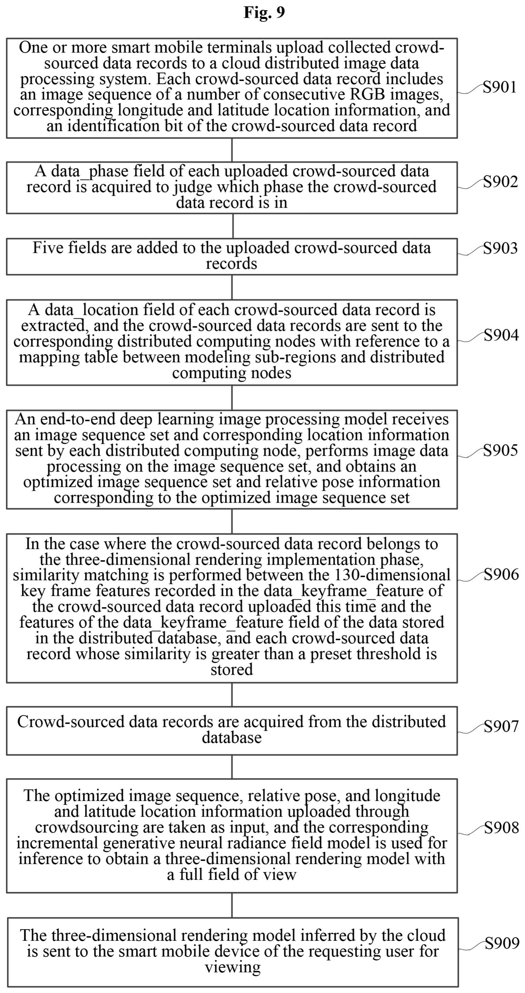

Fig. 9 is a flowchart of a three-dimensional rendering implementation phase according to an embodiment of the present disclosure. As shown in Fig. 9, the process includes the following operations S901 to S909.

In operation S901, one or more smart mobile terminals upload collected crowd-sourced data records to a cloud distributed image data processing system. Each crowd-sourced data record includes an image sequence of a number of consecutive RGB images, corresponding longitude and latitude location information, and an identification bit of the crowd-sourced data record.

In operation S902, a data_phase field of each uploaded crowd-sourced data record is acquired to judge which phase the crowd-sourced data record is in; for example, data_phase = 0 indicates the three-dimensional reconstruction training phase, and data_phase = 1 indicates the three-dimensional rendering implementation phase.

In operation S903, the following five fields are added to the uploaded crowd-sourced data records: data_id, data_score, data_keyframe_id, data_keyframe_feature, and data_frame_pose.

In operation S904, a data_location field of each crowd-sourced data record is extracted, and the crowd-sourced data records are sent to the corresponding distributed computing nodes with reference to a mapping table between modeling sub-regions and distributed computing nodes.

In operation S905, an end-to-end deep learning image processing model receives an image sequence set and corresponding location information sent by each distributed computing node, performs image data processing on the image sequence set, and obtains an optimized image sequence set and relative pose information corresponding to the optimized image sequence set.

The image data processing flow includes: image quality judgment, image denoising, image super-resolution, image semantic segmentation, image generation, descriptor feature extraction, intra-feature matching, fine-grained feature extraction, inter-feature matching, loop closure detection and backend pose optimization.

In the three-dimensional rendering implementation phase, the smart mobile terminal captures RGB images of the desired-to-be-rendered object and acquires longitude and latitude information, uploads the RGB images and the longitude and latitude information to the cloud, and requests the cloud to send a three-dimensional rendering model. The cloud distributed image data processing system performs feature extraction on the images to obtain the 130-dimensional feature vector data_keyframe_feature of the key frame in the image sequence and the relative pose data_frame_pose. Then, the cloud distributed image data processing system invokes the corresponding incremental generative neural radiance field model for forward inference, outputs the full-field-of-view rendering model and sends the full-field-of-view rendering model to the smart terminal, realizing real-time rendering of the modeled object by the smart mobile device. The following specific operations are included.

In operation S906, in the case where the crowd-sourced data record belongs to the three-dimensional rendering implementation phase, similarity matching is performed between the 130-dimensional key frame features recorded in the data_keyframe_feature of the crowd-sourced data record uploaded this time and the features of the data_keyframe_feature field of the data stored in the distributed database, and each crowd-sourced data record whose similarity is greater than a preset threshold is stored.

In an embodiment, if the similarity between all key frames and the uploaded RGB image is below 0.6, it means that no suitable three-dimensional rendering model is found, and the user can be guided to collect crowd-sourced data records through the smart mobile terminal.

In an exemplary embodiment, L2 similarity (i.e., Euclidean distance) is used for measurement. If the similarity is greater than 0.6, the crowd-sourced data record is not stored; otherwise, the crowd-sourced data record is stored.

In the three-dimensional rendering implementation phase, the end-to-end model adopts a sparse weight parameter mode for model forward inference, which can achieve efficient and fast calculation while better handling complex light propagation conditions, and can adaptively adapt to different light sources and material properties, complete missing viewing angles, and improve the efficiency and accuracy of reconstruction and rendering.

In operation S907, crowd-sourced data records are acquired from the distributed database.

In operation S908, the rendering model is acquired: the optimized image sequence, relative pose, and longitude and latitude location information uploaded through crowd-sourcing are taken as input, and the corresponding incremental generative neural radiance field model is used for inference to obtain a three-dimensional rendering model with a full field of view.

In operation S909, rendering presentation: the three-dimensional rendering model inferred by the cloud is sent to the smart mobile device of the requesting user for viewing.

Here, operation S904 corresponds to the data distribution module 61 in the above embodiments, operation S905 corresponds to the image processing module 62 in the above embodiments, and operation S906 corresponds to the data storage module 63 in the above embodiments.

In the three-dimensional rendering implementation phase, the model of the incremental generative radiance field model system only needs to adopt a sparse weight parameter mode for model forward inference, which can achieve efficient and fast calculation while better handling complex light propagation conditions, ensuring the real-time performance of three-dimensional rendering.

Through the above operations, using smart mobile devices for data collection of three-dimensional reconstruction and rendering has portability and flexibility: traditional three-dimensional reconstruction and rendering require the use of high-end equipment and complex software, and often need to transfer the data to be processed to a computer for processing. In the embodiments of the present disclosure, the RGB camera of the smart mobile device is used for data collection, and the data is uploaded to the cloud for processing, avoiding the high requirements for device performance, and making the data processing more flexible and convenient.

The above embodiments of the present disclosure can be applied to smart mobile terminals and cloud distributed computing and storage nodes.

The smart mobile terminal is one of the important application media of the embodiments of the present disclosure, and is the ingress and egress for data upload and rendering model reception. The smart mobile terminal herein may be a smart phone, a tablet computer, a portable computer and other movable devices with a camera, computing capability and the ability to connect to the Internet. These devices have a wide range of application scenarios, are popular devices, and are very portable. Their advantage is to realize the crowd-sourced collection and upload of data required for three-dimensional reconstruction and the presentation of three-dimensional rendering models in a simple and easy-to-use way, providing a more efficient and convenient operation experience, and greatly reducing the professional threshold of data collection for three-dimensional modeling.

Another application medium is distributed cloud computing and storage resources. The cloud system of the embodiments of the present disclosure is divided into a cloud distributed image data processing system and a cloud three-dimensional reconstruction system. The two end-to-end deep learning models included require powerful computing resource support, and cloud computing resources play a vital role in the reconstruction and rendering process. Taking advantage of cloud computing, the efficient utilization and sharing of computing resources can be fully exerted, improving computing efficiency and reducing costs. At the same time, the data storage and management functions of the cloud can also facilitate large-scale data management and sharing.

Therefore, the application environment of the present disclosure is smart mobile devices and cloud computing and storage resources. This application environment can give full play to the advantages of the present disclosure and realize efficient, convenient and high-quality three-dimensional reconstruction and real-time rendering functions.

The following further illustrates the above method of the present disclosure with a specific scenario embodiment, which is three-dimensional modeling of urban traffic street scenes. Specifically, three-dimensional modeling and rendering of a specific area of urban traffic street scenes are performed for map navigation reference, urban style display, traffic planning and creating a digital sand table of an urban area.

Operation S1 is preparation work.

Before starting three-dimensional modeling, some preparations need to be made: first, determine a target area to be modeled, such as a specific area of a city (e.g., a commercial center or a tourist attraction); second, call on citizens (users) and provide the minimum mobile device configuration for participating in crowd-sourced data collection, where these devices should be able to capture high-quality photos and videos; and finally, release a crowd-sourced data collection and three-dimensional rendering app, and provide simple and convenient operation guidance to enable users to quickly master the skills of taking photos or videos and uploading data to the cloud.

Operation S2 is capturing multi-view image sequences.

In the target area, a user opens the app and uses the smart mobile device to take 10 consecutive photos. These photos should cover the entire target area, and the user captures as many buildings, streets, vehicles, pedestrians and other objects as possible, and tries to ensure correct exposure and clear images.

Operation S3 is uploading data to the cloud.

Through the app, the taken photos are uploaded to the cloud, and location information is obtained through the app, thus forming one crowd-sourced data record. These data will be used for subsequent feature extraction and three-dimensional modeling. Since crowd-sourcing is used to upload data, multiple people upload their own photos to cover a wider area and include information about the modeled object under different lighting conditions, improving the quality and reliability of the data.

Operation S4 is image data processing at the cloud.

In the cloud, combined with the distributed node mapping table constructed in the cloud preprocessing flow, the image data uploaded through crowd-sourcing is divided by location area. Several image sequences in the same location area form an image sequence set, which is sent to the corresponding distributed computing node. Then, the image sequence set is processed by the cloud distributed image processing module and the data storage module. The end-to-end deep learning image processing model of the image processing module performs image data processing, feature extraction, matching and pose calculation on the image sequence set, and finally obtains an optimized image sequence set and relative pose information. The data storage module determines whether to store the crowd-sourced data record according to the data_score obtained by the image processing module.

Operation S5 is training the neural radiance field model.

In the same distributed computing node, after the crowd-sourced data records are processed by cloud image data processing, the optimized image sequence set, relative pose information and longitude and latitude location information of the crowd-sourced data records are used as input and processed by the cloud three-dimensional reconstruction system. In the three-dimensional reconstruction training phase, the cloud three-dimensional reconstruction system trains the incremental generative neural radiance field model with full parameters. The model should be able to map image data to the three-dimensional world coordinate system, generate a three-dimensional neural radiance field model, and automatically complete the neural radiance field information of missing fields of view. During training, incremental training can be realized based on the scores of image sequences to continuously improve the accuracy of the neural radiance field model. In the three-dimensional rendering implementation phase, the cloud three-dimensional reconstruction system uses the trained three-dimensional neural radiance field model with sparse parameters for inference to improve the generation efficiency of the three-dimensional rendering model.

Operation S6 is rendering the street scene model.

Through the above operations, the street scene data has been successfully converted into a three-dimensional model. In the three-dimensional rendering implementation phase, the three-dimensional rendering model sent by the cloud can be received on the smart mobile device and viewed on the terminal screen, allowing users to interact with and browse the three-dimensional rendering model.

During rendering, different rendering parameters (e.g., scene lighting, shadows, materials, etc.) can be set according to user needs to meet the needs of different users. At the same time, AR technology can be combined to integrate the street scene model into the real environment, providing a more immersive experience.

Through the above embodiments of the present disclosure, using the incremental generative neural radiance field model for three-dimensional modeling and real-time rendering improves rendering efficiency and quality, and achieves full-field-of-view rendering of the modeled object: in the embodiments of the present disclosure, the neural radiance field model is trained with optimized image data and deployed on the cloud to realize real-time rendering of the scene. Compared with traditional rendering algorithms based on ray tracing, the model in the embodiments of the present disclosure has higher rendering speed and quality, and can provide more realistic rendering effects while ensuring real-time performance. In addition, the neural radiance field model of the present disclosure can realize incremental training, and the model will continue to evolve and become more accurate with the upload of high-quality crowd-sourced data records.

Based on the three-dimensional scene modeling method and cloud system proposed in the embodiments of the present disclosure, three-dimensional scene modeling has significant advantages such as low cost, high precision, high efficiency and good usability. The adoption of cloud distributed computing can process a large amount of image data at the same time, achieve compatibility with different devices, improve the convenience and universality of the system, effectively solve the problems of traditional methods, and have broad application prospects and market value. The scheme can be widely applied to augmented reality, cultural heritage protection, digital cities, etc.

The smart mobile terminal used in the embodiments of the present disclosure is a popular and highly portable device with a wide range of application scenarios. Its advantage is to realize the crowd-sourced collection and upload of data required for three-dimensional reconstruction and the presentation of three-dimensional rendering models in a simple and easy-to-use way, providing a more efficient and convenient operation experience, and greatly reducing the professional threshold of data collection for three-dimensional modeling. As for distributed cloud computing and storage nodes, cloud computing nodes play a vital role in the reconstruction and rendering process. In the embodiments of the present disclosure, taking advantage of cloud computing gives full play to the efficient utilization and sharing of computing resources, improving computing efficiency and reducing costs. At the same time, the data storage and management functions of the cloud can also facilitate large-scale data management and sharing.

The embodiments of the present disclosure also provide a computer-readable storage medium, in which a computer program is stored, and the computer program is configured to execute the operations in any one of the foregoing method embodiments when running on a processor.

In an exemplary embodiment, the computer-readable storage medium may include, but is not limited to, a Universal Serial Bus (USB) flash drive, a Read-Only Memory (ROM), a Random Access Memory (RAM), a mobile hard disk, a magnetic disk, an optical disc, or other media that can store computer programs.

The embodiments of the present disclosure also provide an electronic device, including a memory and a processor, where the memory stores a computer program, and the processor is configured to run the computer program to execute the operations in any one of the foregoing method embodiments.

In an exemplary embodiment, the electronic device may further include a transmission device and an input/output device, where the transmission device is connected to the processor, and the input/output device is connected to the processor.

For specific examples in this embodiment, reference may be made to the examples described in the above embodiments and exemplary implementations, and details are not repeated herein.

Obviously, those having ordinary skill in the art should understand that the modules or operations of the present disclosure described above can be implemented by a general computing device, they can be centralized on a single computing device, or distributed on a network composed of multiple computing devices, and they can be implemented with program codes executable by the computing device, so that they can be stored in a storage device and executed by the computing device, and in some cases, the operations shown or described can be executed in an order different from that herein, or they can be separately fabricated into individual integrated circuit modules, or multiple modules or operations thereof can be fabricated into a single integrated circuit module for implementation. Thus, the present disclosure is not limited to any specific combination of hardware and software.

The above are only the exemplary embodiments of the present disclosure and are not intended to limit the present disclosure. For those skilled in the art, the present disclosure may have various modifications and changes. Any modification, equivalent replacement, improvement, etc. made within the principles of the present disclosure shall be included in the protection scope of the present disclosure.

**Claims**

1. A three-dimensional scene modeling method applied to a cloud system, comprising:
   performing three-dimensional scene modeling on a to-be-modeled scene by using an incremental generative neural radiance field model based on a plurality of crowd-sourced data records collected and uploaded by one or more user terminals, so as to obtain a three-dimensional rendering model of a full field of view of the to-be-modeled scene.

2. The method according to claim 1, wherein performing the three-dimensional scene modeling on the to-be-modeled scene by using the incremental generative neural radiance field model based on the plurality of crowd-sourced data records collected and uploaded by the one or more user terminals comprises:

   performing, by a first cloud system, image data processing on the plurality of crowd-sourced data records to obtain an optimized first image sequence set and relative pose information of each crowd-sourced data record, wherein each crowd-sourced data record corresponds to one first image sequence in the optimized first image sequence set;
   updating, by the first cloud system, information stored in corresponding fields in the plurality of crowd-sourced data records based on the first image sequence, the relative pose information and first location information corresponding to each crowd-sourced data record, and inputting, by the first cloud system, the updated plurality of crowd-sourced data records to a second cloud system; and
   performing, by the second cloud system, the three-dimensional scene modeling by using the incremental generative neural radiance field model based on the updated plurality of crowd-sourced data records, so as to obtain the three-dimensional rendering model of the full field of view of the to-be-modeled scene.

3. The method according to claim 2, wherein performing, by the first cloud system, the image data processing on the plurality of crowd-sourced data records comprises:

   sending, according to the first location information and based on a mapping table between modeling sub-regions and distributed computing nodes, the plurality of crowd-sourced data records to a corresponding distributed computing node, wherein the modeling sub-regions are obtained by the first cloud system by dividing a region corresponding to the to-be-modeled scene according to a priori digital map, and one modeling sub-region corresponds to one piece of first location information; and

receiving, by the first cloud system, a second image sequence set returned by the distributed computing node, and inputting, by the first cloud system, the second image sequence set into an end-to-end deep learning image processing model to perform the image data processing, wherein each second image sequence in the second image sequence set corresponds to one piece of first location information.

4. The method according to claim 3, wherein performing, by the first cloud system, the image data processing on the plurality of crowd-sourced data records to obtain the optimized first image sequence set comprises:

for any second image sequence in the second image sequence set, extracting, by the first cloud system, a mask of respective dynamic objects in each image of the second image sequence through image semantic segmentation, and mapping, by the first cloud system, the mask back to a feature map corresponding to the image, wherein the dynamic objects comprise: a pedestrian, an animal, a vehicle, or a movable static object associated with the pedestrian;

performing, by the first cloud system, background completion for an image inside the mask through image generation based on a contextual relationship of the mask in the feature map and an inter-frame feature relationship of the second image sequence, so as to obtain an optimized image sequence; and

optimizing, by the first cloud system, all second image sequences in the second image sequence set by using above operations to obtain the optimized first image sequence set.

5. The method according to claim 2, wherein performing, by the first cloud system, the image data processing on the plurality of crowd-sourced data records to obtain the relative pose information of each crowd-sourced data record comprises:

for any first image sequence, extracting descriptor information of each image in the first image sequence through descriptor feature extraction and intra-feature matching, and setting an image with a largest number of co-visible descriptors as a key frame of the first image sequence;

performing fine-grained feature extraction on the key frame through fine-grained feature extraction to obtain deep features, wherein the deep features comprise at least one of: fine-grained representation features or fine-grained semantic features;

performing feature concatenation on the first location information corresponding to the first image sequence and the deep features through inter-feature matching to obtain key frame features of the first image sequence;

performing feature matching, loop closure detection and graph optimization on the deep features in the key frame features of the first image sequence through the inter-feature matching, the loop closure detection and backend pose optimization, and obtaining the relative pose information of the crowd-sourced data record corresponding to the first image sequence based on a corresponding relationship between respective first image sequences and the plurality of crowd-sourced data records; and

obtaining the relative pose information of other crowd-sourced data records by using above operations for obtaining the relative pose information.

6. The method according to claim 2, wherein before inputting, by the first cloud system, the updated plurality of crowd-sourced data records to the second cloud system, the method further comprises:

for any crowd-sourced data record, determining a phase in which the crowd-sourced data record is situated according to a phase identifier field of the crowd-sourced data record;

for a first crowd-sourced data record in a three-dimensional reconstruction training phase, storing the first crowd-sourced data record whose first score is greater than or equal to a first preset threshold into a distributed database, wherein the first score is obtained by the cloud system scoring an image quality of the first image sequence corresponding to the first crowd-sourced data record through an image quality judgment component; and

for a second crowd-sourced data record in a three-dimensional rendering implementation phase, performing similarity matching between key frame features of the second crowd-sourced data record and corresponding key frame features stored in the distributed database, and storing the second crowd-sourced data record whose similarity is less than a second preset threshold into the distributed database.

7. The method according to claim 6, wherein before performing the three-dimensional scene modeling by using the incremental generative neural radiance field model, the method further comprises:

obtaining, by the second cloud system, a plurality of first crowd-sourced data records from the distributed database, and sorting the plurality of the first crowd-sourced data records in a descending order based on the first score of each of the plurality of first crowd-sourced data records;

inputting first N first crowd-sourced data records, the relative pose information of the first N first crowd-sourced data records, and the first location information corresponding to the first N first crowd-sourced data records into a pre-designed incremental generative neural radiance field model, so as to obtain a trained incremental generative neural radiance field model, wherein N is an integer greater than zero;

adjusting weights and biases of a neural network in the trained incremental generative neural radiance field model to achieve convergence of the incremental generative neural radiance field model; and

in a case where the incremental generative neural radiance field model achieves convergence, sorting the first N first crowd-sourced data records in a descending order based on a weighted score of each of the first N first crowd-sourced data records, and selecting first M first crowd-sourced data records to perform fine-tuning training on the incremental generative neural radiance field model, wherein M is an integer greater than zero and less than N.

8. A cloud system, comprising:
a modeling module, configured to perform three-dimensional scene modeling on a to-be-modeled scene by using an incremental generative neural radiance field model based on a plurality of crowd-sourced data records collected and uploaded by one or more user terminals, so as to obtain a three-dimensional rendering model of a full field of view of the to-be-modeled scene.

9. A computer-readable storage medium, wherein the computer-readable storage medium stores a computer program, and the computer program, when executed by a processor, causes the processor to execute operations of the method according to any one of claims 1 to 7.

10. An electronic device, comprising a memory, a processor, and a computer program stored on the memory and executable on the processor, wherein the processor is configured to execute operations of the method according to any one of claims 1 to 7 when executing the computer program.

**Fig. 1**

**Fig. 2**

**Fig. 3**

Performing three-dimensional scene modeling on a to-be-modeled scene by using an incremental generative neural radiance field model based on a plurality of crowd-sourced data records collected and uploaded by one or more user terminals, so as to obtain a three-dimensional rendering model of a full field of view of the to-be-modeled scene ⟋ S302

**Fig. 4**

Modeling module 10

**Fig. 5**

**Fig. 6**

EP 4 723 047 A1

**Fig. 7**

23

**Fig. 8**

One or more smart mobile terminals upload collected crowd-sourced data records to a cloud distributed image data processing system. Each crowd-sourced data record includes an image sequence of a number of consecutive RGB images, corresponding longitude and latitude location information, and an identification bit of the crowd-sourced data record — S801

A data_phase field of each uploaded crowd-sourced data record is acquired to judge which phase the crowd-sourced data record is in — S802

Five fields are added to the uploaded crowd-sourced data records — S803

A data_location field of each crowd-sourced data record is extracted, and the crowd-sourced data records are sent to the corresponding distributed computing nodes with reference to a mapping table between modeling sub-regions and distributed computing nodes — S804

An end-to-end deep learning image processing model receives an image sequence set and corresponding location information sent by each distributed computing node, performs image data processing on the image sequence set, and obtains an optimized image sequence set and relative pose information corresponding to the optimized image sequence set — S805

In a case where the crowd-sourced data record belongs to the three-dimensional reconstruction training phase, a score stored in a data_score field of each crowd-sourced data record is judged, and each crowd-sourced data record whose score is not less than a preset threshold is stored in the distributed database — S806

An incremental generative neural radiance field model is designed — S807

The optimized image sequence set in operation S805 is used as a training set, and the image data and relative pose information obtained by the cloud distributed image data processing system, as well as the longitude and latitude location information collected and uploaded by the smart mobile terminals, are input into the designed incremental generative neural radiance field model — S808

Weights and biases of the neural network are continuously adjusted through a backpropagation algorithm to minimize an error between the generated neural radiance field and the actual radiance field — S809

After the model converges, according to the parameter weight information, after softmax processing, the score information is multiplied with the score of the image sequence set obtained during image quality judgment to get final score information — S810

During incremental training, sorting is performed according to the score information of the image sequence set, and only the top 10 image sequences with the highest scores are selected to participate in fine-tuning training — S811

**Fig. 9**

One or more smart mobile terminals upload collected crowd-sourced data records to a cloud distributed image data processing system. Each crowd-sourced data record includes an image sequence of a number of consecutive RGB images, corresponding longitude and latitude location information, and an identification bit of the crowd-sourced data record — S901

A data_phase field of each uploaded crowd-sourced data record is acquired to judge which phase the crowd-sourced data record is in — S902

Five fields are added to the uploaded crowd-sourced data records — S903

A data_location field of each crowd-sourced data record is extracted, and the crowd-sourced data records are sent to the corresponding distributed computing nodes with reference to a mapping table between modeling sub-regions and distributed computing nodes — S904

An end-to-end deep learning image processing model receives an image sequence set and corresponding location information sent by each distributed computing node, performs image data processing on the image sequence set, and obtains an optimized image sequence set and relative pose information corresponding to the optimized image sequence set — S905

In the case where the crowd-sourced data record belongs to the three-dimensional rendering implementation phase, similarity matching is performed between the 130-dimensional key frame features recorded in the data_keyframe_feature of the crowd-sourced data record uploaded this time and the features of the data_keyframe_feature field of the data stored in the distributed database, and each crowd-sourced data record whose similarity is greater than a preset threshold is stored — S906

Crowd-sourced data records are acquired from the distributed database — S907

The optimized image sequence, relative pose, and longitude and latitude location information uploaded through crowdsourcing are taken as input, and the corresponding incremental generative neural radiance field model is used for inference to obtain a three-dimensional rendering model with a full field of view — S908

The three-dimensional rendering model inferred by the cloud is sent to the smart mobile device of the requesting user for viewing — S909

## INTERNATIONAL SEARCH REPORT

| International application No. |
| --- |
| **PCT/CN2024/101056** |

| A. | CLASSIFICATION OF SUBJECT MATTER |
| --- | --- |

G06T 17/00(2006.01)i

According to International Patent Classification (IPC) or to both national classification and IPC

| B. | FIELDS SEARCHED |
| --- | --- |

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE: 三维, 场景, 建模, 模型, 云, 众包, 增量, 神经辐射, 视场角, 视角, 渲染, 序列, 位姿, 映射, 掩膜, 特征, 匹配, 3D, three-dimensional, scene, model, cloud, crowdsourcing, neural radiation, angle of view, visual angle, render, sequence, pose, map, mask, character, match

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 116051740 A (SOUTH CHINA UNIVERSITY OF TECHNOLOGY) 02 May 2023 (2023-05-02) <br> description, paragraphs [0002]-[0127], and figures 1-4 | 1-10 |
| Y | CN 113487732 A (CHINA UNIVERSITY OF GEOSCIENCES (WUHAN)) 08 October 2021 (2021-10-08) <br> description, paragraphs [0029]-[0061], and figure 1 | 1-10 |
| A | CN 110060343 A (BAIDU ONLINE NETWORK TECHNOLOGY (BEIJING) CO., LTD.) 26 July 2019 (2019-07-26) <br> entire document | 1-10 |
| A | WO 2021208442 A1 (GUANGDONG BRIGHT DREAM ROBOTICS CO., LTD.) 21 October 2021 (2021-10-21) <br> entire document | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **02 September 2024** | **27 September 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/101056**

| Patent document cited in search report | | | Publication date (day/month/year) | Patent family member(s) | | | Publication date (day/month/year) |
|---|---|---|---|---|---|---|---|
| CN | 116051740 | A | 02 May 2023 | None | | | |
| CN | 113487732 | A | 08 October 2021 | None | | | |
| CN | 110060343 | A | 26 July 2019 | None | | | |
| WO | 2021208442 | A1 | 21 October 2021 | CN | 113592989 | A | 02 November 2021 |
| | | | | HK | 40057497 | A0 | 14 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310803208